Europäisches Patentamt

European Patent Office

Office européen des brevets

(19)

(11) Veröffentlichungsnummer: **0 153 279**
**B1**

(12) # EUROPÄISCHE PATENTSCHRIFT

(45) Veröffentlichungstag der Patentschrift:
07.10.87

(51) Int. Cl.⁴: **G 03 B 27/32**

(21) Anmeldenummer: **85810052.2**

(22) Anmeldetag: **11.02.85**

(54) Photographisches Vergrösserungsgerät.

(30) Priorität: **17.02.84 GB 8404231**

(43) Veröffentlichungstag der Anmeldung:
**28.08.85 Patentblatt 85/35**

(45) Bekanntmachung des Hinweises auf die Patenterteilung:
**07.10.87 Patentblatt 87/41**

(84) Benannte Vertragsstaaten:
**BE CH DE FR GB IT LI**

(56) Entgegenhaltungen:
**DE - A - 2 643 819**
**DE - C - 824 597**
**FR - A - 381 258**
**FR - A - 1 285 424**
**US - A - 1 986 693**
**US - A - 2 634 651**
**US - A - 3 644 036**

(73) Patentinhaber: **CIBA-GEIGY AG, Klybeckstrasse 141,
CH-4002 Basel (CH)**

(72) Erfinder: **Moss, Brian Frank, 15 Woodfin Croft, Chelford
Cheshire (GB)**
Erfinder: **Brent, Richard John, 43 Meadway, Bramhall
Cheshire SK7 1JZ (GB)**

ACTORUM AG

## Beschreibung

Die Erfindung betrifft ein photographisches Vergrösserungsgerät vom Typ mit umschlossenem Bildfeld, welches bei Tageslicht verwendet werden kann.

Seit einigen Jahren ist es schwierig, in einem gewöhnlichen Wohnhaus einen Raum zu schaffen, der hinreichend abgedunkelt werden kann, um als Dunkelkammer zu dienen, in der Negative auf lichtempfindliches Kopiermaterial kopiert werden können. Es befinden sich eine Anzahl Vergrösserer auf dem Markt, bei welchen das Lampenhaus und der Halter für die Transparentvorlage auf einem Kasten oder einen zeltartigen Gehäuse montiert sind, von welchem ein Bildfeld umschlossen ist, auf das das Bild der Transparentvorlage fokussiert wird, um das Bild dort wiederzugeben und das Kopiermaterial zu belichten. In manchen Fällen ist Vorsorge dafür getroffen, dass im umschlossenen Bildfeld eine Behandlungsschale untergebracht werden kann, doch führt dies zu einer unhandlichen Gestalt des eingeschlossenen Bereiches, um darin die Schale unterbringen zu können. Andererseits kann im umschlossenen Bereich ein Schlitz vorgesehen sein, durch welchen hindurch belichtetes Kopiermaterial in eine anschliessende, ausserhalb des umschlossenen Bildfeldes vorgesehene Behandlungsschale überführt werden kann. Doch hat es sich als schwierig erwiesen, die Überführungseinrichtung lichtdicht zu gestalten. Auch ist es wegen des beschränkten Raumes des eingeschlossenen Bereiches schwierig, die belichtete Kopie durch einen Spalt in der Wand des umschlossenen Bereiches zu leiten, da die Bewegungsmöglichkeit eines durch ein Handloch in der Wandung des umschlossenen Bereiches gesteckten Armes hierdurch begrenzt ist.

Weiter muss in Vergrösserungsgeräten mit umschlossener Bildeinstellung dafür Sorge getragen werden, dass das Bild der Transparentvorlage im Bildfeld wiedergegeben wird. Dies wird gewöhnlich erreicht entweder durch Verwendung eines beweglichen Spiegels, der in einer Stellung Licht aus dem umschlossenen Gehäuse auf einen Benutzer lenkt, oder durch Anfertigung des Gehäuses auf einem Filtermaterial, welches dem Benutzer gestattet, das vergrösserte Bild im Vergrösserungsfeld zu betrachten, aber gleichzeitig chemisch auf das Kopiermaterial einwirkendes Licht ausfiltert. Diese Filtermethode stiess jedoch in der Praxis auf Schwierigkeiten, insbesondere für Anfänger, und die zuerst erwähnte Methode erhöht die Herstellungskosten des Vergrösserungsgeräts erheblich.

Sowohl die DE-A-2 643 819 als auch die US-A-3 644 036 beschreiben Vergrösserungs- und Kopiergeräte ohne Dunkelraum. In beiden Fällen umfasst das Gerät eine Grundplatte mit einem Gestell, an dem ein im wesentlichen ein Lampenhaus und einen Transparentvorlagenhalter umfassendes Vergrösserungsgerät festgeklemmt werden kann. Ein balgenförmiges Gehäuseteil ist zwischen dem Vergrösserer und der Grundplatte vorgesehen und umschliesst lichtdicht ein Betrachtungsfeld, welches mit einer Wanne oder dergleichen Behälter ausgerüstet ist. Die Wanne kann durch eine Seitenwand am

unteren Balgenende hindurch in das Bodenende des Balgens hineingestellt oder daraus entfernt werden. In jedem Falle ist der Balgen an seinem oberen Ende mit einer verschliessbaren Schauöffnung versehen, so dass ein Bild durch die Öffnung hindurch während seiner Scharfeinstellung auf das Betrachtungsfeld beobachtet werden kann, worauf lichtempfindliches Papier belichtet und in der Wanne oder im Behälter entwickelt werden kann.

Vergrösserungsgeräte dieser Art sind schwierig aufzubauen, insbesondere dasjenige der DE-A-2 643 819, das mit einer Einrichtung zum Verstellen des Betrachtungsfeldes und der Wanne in jeder beliebigen Richtung auf der Grundplatte versehen ist. Ausserdem ist das Gerät sperrig und schwierig zu verpacken oder bei Nichtgebrauch zu lagern.

Die FR-A-1 285 424 beschreibt einen Vergrösserer, der auf einer starren länglichen Grundplatte am einen Ende eine Lichtquelle, ein Kondensorlinsensystem und einen Transparentvorlagenhalter trägt. Ein solides Rückenteil befindet sich am einen Ende der Grundplatte und ein Stirnteil mit einem Rahmen am anderen Ende. Ein mit der Grundplatte verbundener Schutzdeckel sorgt für lichtdichten Abschluss. Der Rahmen weist ein Fenster auf, und eine Mattscheibe oder dergleichen Schirm kann in eine Aussparung im Rahmen eingesetzt werden, so dass das Bild einer zu vergrössernden Transparenzvorlage auf dem Schirm fokussiert werden kann. Ein Blatt oder eine Platte lichtempfindlichen Materials, aus welchem eine Kopie gefertigt werden soll, kann zur Belichtung auf den Schirm in der Umhüllung aufgelegt werden. Dieses Vergrösserungsgerät ist ebenfalls sperrig und beansprucht infolge seiner langen, starren Grundplatte viel Raum. Auch sind die Art und Weise, in welcher der Schutzdeckel befestigt ist, und die Anordnung zur Einführung des Schirms oder lichtempfindlichen Materials so vorgesehen, dass es sehr schwierig ist, zu jeder Zeit einen lichtdichten Verschluss des Geräts sicherzustellen, besonders da der Schutzdeckel aus biegsamem Blattmaterial hergestellt ist und durch einfaches nachgiebiges Untergreifen von Längsflanschen der Grundplatte auf diese aufgepasst wird.

Es ist daher die Aufgabe der vorliegenden Erfindung, ein photographisches Vergrösserungsgerät zu schaffen, dessen Gebrauch besonders für den Amateurphotographen nützlich ist. Zu diesem Zweck ermöglicht das Vergrösserungsgerät, dass das vergrösserte Bild im Bildfeld leicht zu betrachten ist, und umfasst Mittel zur Belichtung und Verarbeitung von Kopiermaterial bei vollem Tageslicht, ohne viel Raum zu beanspruchen, wenn es nicht benutzt wird.

Gemäss der vorliegenden Erfindung wird die Aufgabe durch ein Vergrösserungsgerät gelöst, wie es im Patentanspruch 1 beschrieben ist. Bevorzugte Ausführungsformen des erfindungsgemässen Vergrösserungsgeräts weisen eines oder mehrere der in den Unteransprüchen 2 und 3 aufgeführten Merkmale auf. Hierdurch wird eine besonders kompakte und günstige Bauweise erreicht, wobei der Betrachtungsschirm am einen Ende des Tunnelgehäuses und die Kassette am anderen Ende befestigt ist, während das Lampenhaus im Gehäuse untergebracht und durch den Schirm und die Kassette weitgehend vor Staub und Schmutz geschützt ist.

Besonders günstige Ausführungsformen des photographischen Ausführungsgeräts nach der Erfindung weisen eines oder mehrere der im kennzeichnenden Teil der Unteransprüche 4,5 und 6 aufgeführten Merkmale auf.

Weitere Einzelheiten und Zwecke der Erfindung sind aus der folgenden Beschreibung der beigefügten Zeichnung und aus dieser selbst ersichtlich, in welcher eine bevorzugte Ausführungsform des erfindungsgemässen photographischen Vergrösserungsgeräts beispielsweise und schematisch dargestellt ist. In der Zeichnung zeigen:

Fig. 1 eine auseinandergezogene Seitenansicht,

Fig. 2 eine Querschnittsansicht des zusammengebauten Vergrösserungsgeräts in der in Fig. 1 gezeigten Ausführungsform,

Fig. 3 eine perspektivische Ansicht der unteren Hälfte eines Teils des Vergrösserungsgeräts, in welche ein anderer Teil eingefügt ist,

Fig. 4 eine perspektivische Ansicht eines entfernbaren, zum Halten einer Kopie dienenden Rahmens, und

Fig. 5 eine perspektivische Ansicht einer abgeänderten Ausführungsform des in Fig. 4 gezeigten Rahmens.

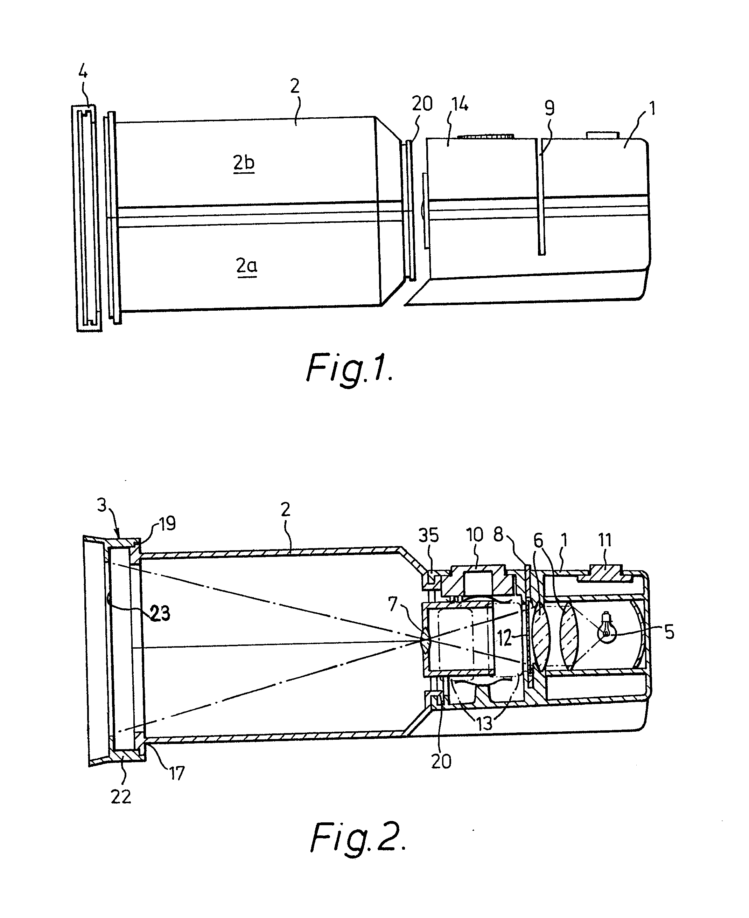

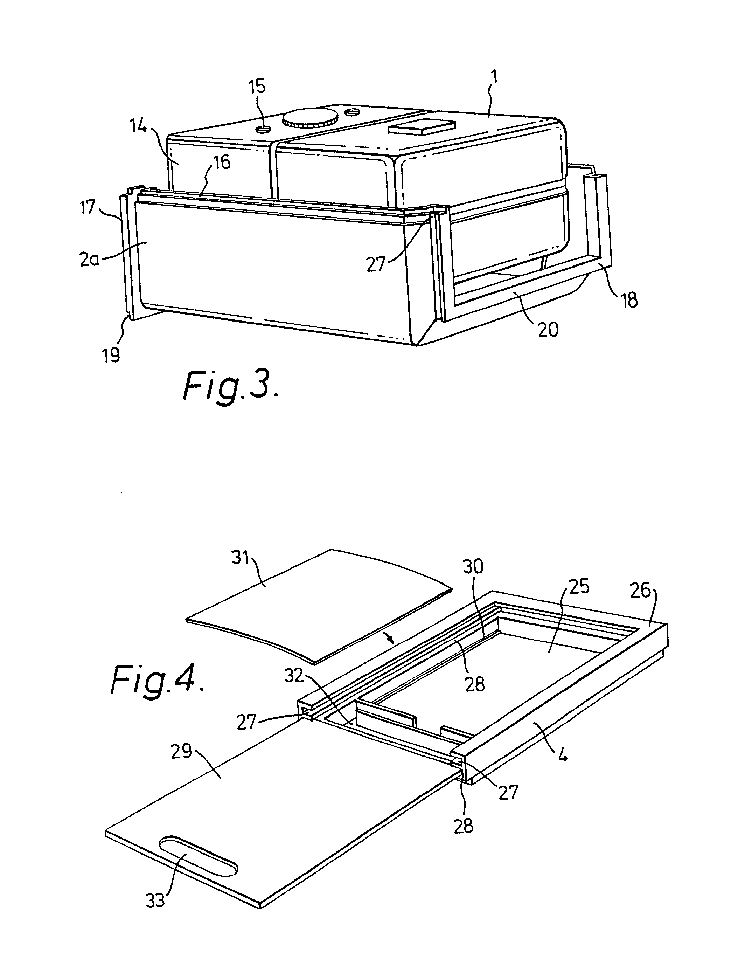

In Fig. 1 bis 4 ist ein Tageslicht-Vergrösserungsgerät vom Typ mit umschlossenem Bildfeld gezeigt, welches ein Lampenhaus 1 umfasst, das auf das eine Ende eines aus lichtdichtem Material hergestellten Vergrösserungstunnel-Gehäuses 2 passt. Das andere Ende des Tunnelgehäuses ist entweder durch einen Betrachtungsschirm 3, wie er in Fig. 2 gezeigt ist, oder durch eine in Fig. 1 gezeigte Entwicklungskassette 4 verschlossen. Das Tunnelgehäuse 2 ist der Länge nach in zwei gleiche Hälften 2a und 2b geteilt, wobei die Hälfte 2a in Fig. 3 gezeigt ist.

Das Lampenhaus 1 ist kompakt ausgebildet und umfasst, wie in Fig. 2 gezeigt, eine Lampe 5, zwei Sammellinsen 6, eine Vergrösserungslinse 7, die in einem zylindrischen, zum Fokussieren dienenden Einstellglied montiert ist, und einen Halter 8 für Transparentvorlagen 12, z.B. Dias, welcher in den Spalt 9 eingeschoben und aus diesem wieder herausgezogen werden kann, wobei der Vorlagenhalter 8 im Bereich des Umfangs des Spaltes 9 in lichtdichter Weise anliegt, wenn er in den Spalt eingeführt ist. Das Lampenhaus 1 besitzt einen Einstellknopf 10 zum Bewegen der Linse 7 und einen Ein/Aus-Schaltknopf 11, der dazu dient, die Lampe 5 in den Stromkreis einer Anordnung von gestrichelt dargestellten Batterien 13 einzuschalten, wobei die elektrischen Leitungen der Übersichtlichkeit halber weggelassen sind.

Der obere Teil 14 des Lampenhauses 1 zwischen dem Spalt 9 und dem an das Tunnelgehäuse 2 anschliessenden Lampenhausende ist vom übrigen Teil des Lampenhauses getrennt und in seiner Stellung mittels zwei Schrauben 15 (Fig. 3) befestigt. Der Teil 14 kann entfernt werden, um das Befestigen des Tunnelgehäuses 2 am Lampenhaus 1 und ebenso sein Abtrennen vom Gehäuse 2 in der im folgenden beschriebenen Weise zu gestatten.

Wie oben erwähnt, besteht das Tunnelgehäuse aus zwei Hälften und ist so gestaltet und bemessen, dass das Lampenhaus 1 zwecks Lagerung darin untergebracht werden kann. Fig. 3 zeigt die Tunnelgehäusehälfte 2a mit dem darin befindlichen Lampenhaus 1 in einer Stellung, die das Verschliessen des Gehäuses mittels der anderen Gehäusehälfte 2b erlaubt. Die Längsränder 16 der beiden Hälften des Tunnelgehäuses sind so geformt, dass sie beim Aufeinandersetzen der oberen Hälfte auf die untere Hälfte miteinander so in überlappenden Eingriff gebracht werden, dass die Fuge zwischen ihnen lichtdicht verschlossen ist.

Die beiden Hälften besitzen Verstärkungsleisten 17 am einen Ende und 18 am anderen Ende. Die Verstärkungsleisten 17 am einen Ende des beim Zusammenfügen der beiden Hälften 2a und 2b erhaltenen Tunnelgehäuses 2 bilden ein rechteckiges Fenster, dessen obere und untere Kanten jeweils mit einem Nutfalz 19 versehen sind. In gleicher Weise bilden die Verstärkungen 18 am anderen Ende des Tunnelgehäuses ein rechteckiges Fenster mit einem umlaufenden Flansch, der einen Nutfalz 21 bildet.

Der Betrachtungsschirm 3 umfasst, wie in Fig. 2 gezeigt, einen rechteckigen Rahmen 22 der eine Mattscheibe 23 aus Glas umgibt. Der Rahmen 22 hat einen angeformten Falz, der in eine Aussparung des Nutfalzes 19 am Ende des Tunnelgehäuses hineinpasst, so dass der Rahmen in eine Stellung hinein und aus ihr auch wieder hinausgeschoben werden kann, in der die Mattscheibe am Ende des Tunnelgehäuses liegt.

Die Kassette 4 ist in Fig. 4 gezeigt. Sie umfasst eine flache Grundplatte 25, die auf drei Seiten von einer erhabenen Umrandung 26 umgeben ist. Die längeren Kanten der Umrahmung 26 sind jede mit zwei nach einwärts offenen Nuten 27 und 28 geformt, und eine Kassettendeckplatte 29 aus für aktinisches Licht undurchlässigem Material ist in den Nuten 28 verschiebbar gelagert, so dass sie die Grundplatte 25 lichtdicht überdecken kann. Die Umrandung 26 hat auf jeder Innenseite der Grundplatte 25 benachbart eine vorstehende Rippe 30, die dazu dient, auf der Grundplatte 25 ein Blatt 31 photographischen Kopiermaterials zu haltern, auf welchem eine Vergrösserung entwickelt werden soll.

Wie aus Fig. 4 ersichtlich, ist die Kassette 4 an einem Ende wirksam verschlossen und am anderen offen, um ein Verschieben der Deckelplatte 29 zu gestatten. Am offenen Kassettenende ist ein als Lichtschleuse gestalteter Durchlass 32 vorgesehen, der mit dem Bereich der Grundplatte, welcher das Kopiermaterial 31 aufnehmen soll, in Verbindung steht. Die Deckelplatte 29 weist ein Loch 33 auf, das mit dem Durchlass 32 in Verbindung steht, wenn die Deckelplatte 29 sich in Verschlussstellung befindet.

Die Kassette 4 ist so geformt und bemessen, dass sie längs dem Rand des Tunnelgehäuses 2 gleiten kann, wobei ihre Nuten 27 mit den Nutfalzen 19 in Eingriff stehen, so dass das Tunnelgehäuse 2 entweder durch den Betrachtungsschirm 3 oder durch die Kassette 4 verschlossen werden kann. Ausserdem ist es auch vorteilhaft, wenn die Kassette 4 so ausgebildet ist, dass sie über das andere Ende des Tunnelgehäuses 2 geschoben werden kann, wenn das Vergrösserungsgerät zur Lagerung verpackt werden soll, und in diesem Falle greift der Flansch 20 in die Nut 27 ein.

Beim Betrieb des vorstehend beschriebenen Vergrösserungsgeräts wird eine Transparentvorlage, von der eine Vergrösserung angefertigt werden soll, in den Vorlagenhalter 8 eingesetzt, der dann in seine Stellung im Spalt 9 eingeschoben wird. Der Betrachtungsschirm 3 wird dann, wie in Fig. 2 gezeigt, am einen Ende des Tunnelgehäuses 2 befestigt und die Lampe 5 wird durch Drücken des Knopfes 11 eingeschaltet. Der Strahlengang ist durch gestrichelte Linien in Fig. 2 angedeutet, und ein vergrössertes Bild der Vorlage wird für den Benutzer auf der Mattscheibe 23 sichtbar. Obwohl der Vergrösserer vom Typ mit Festvergrösserung ist, kann eine Feinfokussierung des Bildes erforderlich sein und kann durch Drehen des Einstellknopfes 10 und damit durch Bewegen der Linse 7 auf den Kondensorlinsensatz zu oder von diesem weg bewerkstelligt werden.

Sobald der Benutzer vom Anblick des vergrösserten Bildes auf dem Schirm 3 befriedigt ist, schaltet er die Lampe 5 aus und der Betrachtungsschirm 3 wird entfernt.

Im abgedunkelten Gehäuseinneren wird nun ein Stück photographisches Kopiermaterial auf die Grundplatte 25 des Rahmens 4 gebracht und wird auf dieser durch Unterschieben seines Randes unter die Rippen 30 festgehalten. Der Kassettendeckel 29 wird dann über das Kopiermaterial geschoben und die geschlossene Kassette kann nun dem Tageslicht ausgesetzt werden.

Die Kassette 4 wird dann an Stelle des Betrachtungsschirmes 3 am gleichen Ende des Tunnelgehäuses 2 angebracht, der Deckel 29 wird in die in Fig. 4 gezeigte Stellung herausgezogen und die Lampe während der erforderlichen Belichtungszeit eingeschaltet. Das Kopiermaterial wird so durch die Vorlage hindurch belichtet, und die Dimensionen der Kassette 4 und des Schirmes 3 sind derart bemessen, dass, wenn die Kassette 4 sich in Stellung am Tunnelgehäuse 2 befindet, das Kopiermaterial in derjenigen Ebene liegt, in welcher das Bild auf dem Betrachtungsschirm fokussiert worden war.

Sobald das Kopiermaterial während der korrekten Zeit belichtet worden ist, wird die Lampe 5 abgeschaltet und die Deckelplatte 29 wird dann wieder in die Kassette 4 eingeschoben, um das Kopiermaterial gegen das Licht zu schützen, worauf der Kassettenrahmen vom Ende des Tunnelgehäuses 2 entfernt wird. Die Entwicklung des Kopiermaterials kann nun so vor sich gehen, dass Entwicklerlösung durch die Öffnung 33 in den Rahmen gegossen wird, wobei die Flüssigkeit durch den Lichtschleusendurchlass 32 fliesst und in Kontakt mit dem Kopiermaterial kommt. Vorzugsweise ist die Entwicklerlösung ein Monobad, welches das latente Bild im Kopiermaterial entwickelt und durch Entfernen von unbelichtetem Silberhalogenid fixiert. Dieses Entwickeln kann bei Tageslicht vorgenommen werden, da der Kassettenrahmen gegen die Einwirkung von aktinischem Licht abgedichtet ist. Weiter besteht die Deckelplatte 29 vorzugsweise aus rotem Filtermaterial, welches undurchlässig für solches Licht ist, gegen das Kopiermaterial empfindlich ist, so dass die Entwicklung des Bildes bei Tageslicht beobachtet werden kann, während sie unter der Einwirkung der Entwicklerlösung vor sich geht.

Wird jedoch keine Monobad-Entwickler- und Fixierlösung verwendet, so kann das latente Bild ebenfalls durch Eingiessen der Entwicklerlösung in die Kassette entwickelt werden. Nach erfolgter Entwicklung des latenten Bildes muss dann jedoch die Lösung aus der Öffnung 33 ausgegossen und eine Fixierlösung in den Rahmen eingefüllt werden.

In jedem der beiden Fälle wird dann die fertige Vergrösserung aus der Kassette genommen und kann dann gewaschen und zur Lagerung getrocknet werden.

Um das Vergrösserungsgerät, wenn es für längere Zeit nicht benutzt werden soll, unter möglichst wenig Raumbeanspruchung zu lagern, was wichtig ist für den Amateurphotographen, dem in einem Haus oder einer Wohnung kein besonderer Raum für photographische Zwecke zur Verfügung steht, ist das Vergrösserungsgerät nach der Erfindung so konstruiert, dass es auseinandergenommen und auf kleinem Raum wieder in anderer Weise zusammengebaut werden kann. Hierzu werden die Schrauben 15 entfernt, wodurch der Oberteil 14 des Lampenhauses 1 gelöst wird. Wie in Fig. 2 gezeigt, weist der Oberteil 14 einen nach innen gerichteten Flansch 35 auf, der in die Nut 21 eingreift, so dass bei Freigabe des Oberteils 14 das Tunnelgehäuse 2 vom übrigen Teil des Lampenhauses 1 abgetrennt werden kann. Das Tunnelgehäuse wird dann in seine beiden Hälften 2a und 2b zerlegt und das Lampenhaus 1 in der Gehäusehälfte 2a untergebracht, wie dies Fig. 2 zeigt, nachdem der Teil 14 und die Schrauben 15 wieder angebracht wurden. Die obere Hälfte 2b des Tunnelgehäuses 2 wird dann aufgesetzt und der Betrachtungsschirm in einer Stellung über den Flansch 17 befestigt, wie dies in Fig. 2 gezeigt ist, während die Kassette 4 an dem anderen Flansch 18 angebracht wird, um so eine sehr kompakte, Platz sparende Anordnung zu schaffen.

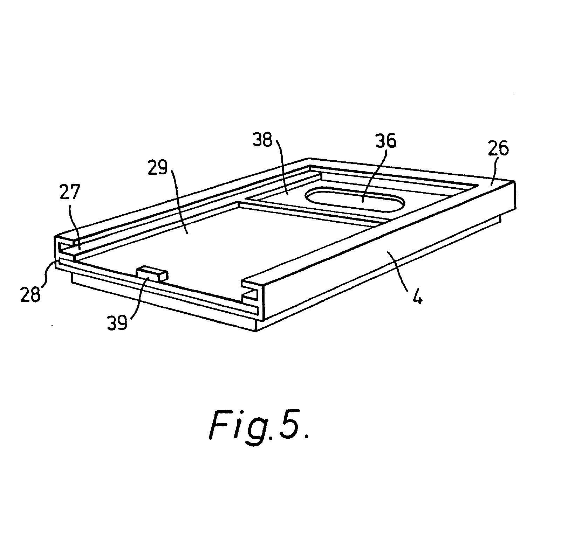

Eine abgeänderte Ausführungsform der Kassette 4 ist in Fig. 5 gezeigt und ist der in Fig. 4 gezeigten ähnlich. Daher tragen entsprechende Teile gleiche Bezugszeichen. In der in Fig. 5 gezeigten Kassette befindet sich die Öffnung 36, durch welche Entwicklerlösung gegossen werden soll, nicht in der Kassettendeckelplatte selbst, sondern in einer feststehenden Platte 38. Die verschiebbare Deckelplatte 37 hat einen Knopf 39, mittels welchem sie in der Nut 28 verschoben werden kann.

Natürlich können viele andere Änderungen im soeben beschriebenen Vergrösserungsgerät vorgenommen werden, insbesondere mit Bezug auf die Art und Weise, in welcher das Tunnelgehäuse geöffnet werden kann, um das Lampenhaus darin unterzubringen, und in welcher das Lampenhaus im Tunnelgehäuse befestigt werden kann. So kann, z.B. der eine Teil des Tunnelgehäuses mit dem anderen durch eine längsgerichtete Scharnierverbindung verbunden sein, und das Lampenhaus kann so angeordnet und konstruiert sein, dass es auf das Ende des Tunnelgehäuses in ähnlicher Weise wie die Entwicklungskassette aufgeschoben werden kann, wobei in jedem Falle eine lichtdichte Verbindung gewährleistet sein muss.

## Patentansprüche

1. Tageslicht-Vergrösserungsgerät mit umschlossenem Bildfeld, umfassend ein zur Unterbringung einer Lampe (5) und einer Linsenanordnung (6, 7) dienendes Lampenhaus (1) und eine Einrichtung (8) zur Aufnahme eines Negativs, einer transparenten Vorlage oder dergleichen, ein am Lampenhaus (1) befestigtes, den Vergrösserungstunnel bildendes Gehäuse (2), eine Betrachtungsvorrichtung (3) und eine Kassette (4) zur Aufnahme von Material, auf welches eine Vergrösserung kopiert werden soll, dadurch gekennzeichnet, dass das Gehäuse (2) des Vergrösserungstunnels und das Lampenhaus (1) lösbar miteinander verbunden sind und das Vergrösserungstunnelgehäuse (2) so ausgebildet und bemessen ist, dass nach Lösung der Verbindung mit dem letzteren das Lampenhaus (1) zwecks Lagerung im Gehäuse (2) untergebracht werden kann, und dass die Betrachtungsvorrichtung (3) und die Kassette (4) so ausgebildet sind, dass sie an dem dem Lampenhaus (1) gegenüberliegenden Ende des Gehäuses (2) des Vergrösserungstunnels lösbar befestigt werden können.

2. Vergrösserungsgerät nach Anspruch 1, dadurch gekennzeichnet, dass das Vergrösserungstunnelgehäuse (2) der Länge nach in zwei abnehmbare, einander lichtdicht anschliessbare Teile (2a, 2b) geteilt ist, um das Einbringen des Lampenhauses (1) in das Gehäuse (2) zu gestatten.

3. Vergrösserungsgerät nach Anspruch 1 oder 2, dadurch gekennzeichnet, dass dasjenige Ende des Tunnelgehäuses (2), an welches das Lampenhaus (1) angeschlossen werden kann, so gestaltet und bemessen ist, dass die Kassette (4) daran auch bei im Gehäuse (2) gelagertem Lampenhaus (1) angebracht werden kann.

4. Vergrösserungsgerät nach einem der Ansprüche 1 bis 3, dadurch gekennzeichnet, dass das Lampenhaus (1) eine Glühbirne (5) enthält und mit einer Einrichtung zur Aufnahme und zum Anschliessen einer oder mehrerer Batterien als Stromquelle für die Glühbirne (5) versehen ist.

5. Vergrösserungsgerät nach einem der Ansprüche 1 bis 4, dadurch gekennzeichnet, dass die Kassette (4) aus Rotfiltermaterial besteht.

6. Vergrösserungsgerät nach einem der Ansprüche 1 bis 5, dadurch gekennzeichnet, dass die Kassette (4) eine Eingangsöffnung (32, 33) und einen von der Eingangsöffnung zum Bildfeld führenden Kanal aufweist, so dass Entwicklerflüssigkeit durch die Eingangsöffnung auf das Kopiermaterial (31) gegossen werden kann.

## Claims

1. Daylight-enlarger with enclosed picture field, comprising a lamp house (1) serving to contain a lamp (5) and a lens arrangement (6, 7) and a device (8) for containing a negative, a transparent pattern or the like, a housing (2) attached to the lamp house (1) and forming the enlargement tunnel, a viewing device (3) and an adapter (4) for containing material on which the enlargement is to be copied, characterized by the fact that the housing (2) of the enlargement tunnel and the lamp house (1) are connected with each other detachably and the enlargement tunnel housing (2) is designed and dimensioned in such a way that, after separation of the connection with the latter, the lamp house (1) can be placed in the housing (2) for storage purposes, and that the viewing device (3) and the adapter (4) are designed in such a way that they can be fastened detachably on the end of the housing (2) opposite the lamp house (1) of the enlargement tunnel.

2. Enlarger according to Claim 1, characterized in that the enlargement tunnel housing (2) is divided longitudinally into two detachable parts (2a, 2b), which can be connected to each other in a light-proof fashion, so as to permit the placement of the lamp house (1) in the housing (2).

3. Enlarger according to Claim 1 or 2, characterized in that the end of the tunnel housing (2) to which the lamp house (1) can be joined is designed and dimensioned in such a way that the adapter (4) can also be mounted on it in the case of the lamp house (1) stored in the housing (2).

4. Enlarger according to one of Claims 1 to 3, characterized in that the lamp house (1) contains an incandescent bulb (5) and is provided with a device for containing and connecting one or several batteries as a current source for the incandescent bulb (5).

5. Enlarger according to one of Claims 1 to 4, characterized in that the adapter (4) consists of red filter material.

6. Enlarger according to one of Claims 1 to 1 to 5, characterized in that the adapter (4) exhibits an entry aperture, (32, 33) and a channel running from the entry aperture to the picture field, with the result that developer can be poured through the entry aperture onto the copying material.

## Revendications

1. Agrandisseur à la lumière du jour, avec champ d'image enfermé, comprenant une lanterne (1) servant à abriter une lampe (5) et un dispositif de lentilles (6, 7), un dispositif (8) pour recevoir un négatif, un original transparent ou autre, un carter (2) fixé à la lanterne (1) er formant le tunnel d'agrandissement, un dispositif de regard (3) et enfin une cassette (4) pour recevoir un matériau sur lequel on veut copier l'agrandissement, caractérisé par le fait que le carter (2) formant le tunnel d'agrandissement et la lanterne (1) sont reliés entre eux de façon amovible et le carter tunnel d'agrandissement (2) est établi et dimensionnée en sorte que, après avoir rompu, l'assemblage de la lanterne (1) avec ce dernier, on puisse la loger dans le carter (2) aux fins de stockage et que le dispositif de regard (3) et la cassette (4) sont établis en sorte qu'ils puissent être fixés de façon amovible à l'extrémité du carter (2) située à l'opposé de la lanterne (1).

2. Agrandisseur selon la revendication 1, caractérisé par le fait que le carter tunnel d'agrandissement (2) est divisé suivant sa longueur en deux parties (2a, 2b) amovibles assemblables entre elles de façon étanche à la lumière pour permettre d'insérer la lanterne (1) dans ledit carter (27.

3. Agrandisseur selon la revendication 1 ou 2, caractérisé par le fait que l'extrémité du carter en fixés de façon amovible à l'extrémité du carter (2) située est établie et dimensionnée en sorte que la cassette (4) puisse y être aussi logée lorsque la lanterne (1) est abritée dans le carter (2).

4. Agrandisseur selon l'une des revendications 1 à 3, caractérisé par le fait que la lanterne (1) renferme une lampe à incandescence (5) et est pourvue d'un dispositif de logement et de raccordement d'une ou de plusieurs batteries en tant que source de courant pour ladite lampe à incandescence (5).

5. Agrandisseur selon l'une des revendications 1 à 4, caractérisé par le fait que la cassette (4) est constituée par un matériau filtrant la lumière rouge.

6. Agrandisseur selon l'une des revendications 1 à 5, caractérisé par le fait que la cassette (4) comporte une ouverture d'entrée (32, 33) et un canal conduisant de l'ouverture d'entrée au champ d'image en sorte que l'on puisse verser du liquide révélateur sur le matériau de copie (31) à travers ladite ouverture d'entrée.

6

Fig.1.

Fig.2.

Fig.3.

Fig.4.

*Fig.5.*